# EUROPEAN PATENT APPLICATION

(11) **EP 1 693 607 A2**
(43) Date of publication of application: **23.08.2006**
(21) Application number: 06003193.7
(22) Date of filing: 16.02.2006
(51) Int. Cl.: F16K 31/06

(54) **Solenoid valve and method of producing the same**

(30) Priority: 22.02.2005 JP 2005045927
(71) Applicant: AISIN SEIKI KABUSHIKI KAISHA, Kariya-shi, Aichi-ken 448-8650 (JP)
(72) Inventor: Kamidate, Yoshinobu c/o Intell.Prop.Dept., Kariya-shi Aichi-ken, 448-8650 (JP); Komatsu, Satoshi c/o Intell.Prop.Dept., Kariya-shi Aichi-ken, 448-8650 (JP)
(74) Representative: Kramer - Barske - Schmidtchen

(57) **Abstract**

A solenoid valve including a first yoke (5), a second yoke (3), an intermediate member (7) for connecting the first yoke and the second yoke to each other, a coil (11) provided on an outer side of the first yoke and the second yoke and cylindrically formed by a wire wound, a movable member (9) movably supported by an inner peripheral face (5e) of the first yoke so as to face the second yoke and moving towards the second yoke by means of an attractive force generated between the second yoke and the movable member in association with a power supply to the coil, and the case for accommodating the yoke and the coil characterized in that the solenoid valve further comprises an insulating film (8) formed on respective outer peripheral faces (5c, 3c) of the first yoke and the second yoke, and the coil is wound around the first yoke and the second yoke via the insulating film.

## Description

### FIELD OF THE INVENTION

This invention generally relates to a solenoid valve and method of producing the same.

### BACKGROUND

A known solenoid valve is disclosed in JP2001-343086A. The solenoid valve disclosed includes a cylindrical bobbin, a movable core movably arranged on an inner peripheral side of the bobbin, a fixed core arranged so as to face an end portion of the movable core, a spherical valve for bringing a fluid passage to be connected or disconnected in response to a movement of the movable core, and a spring for biasing the movable core. The bobbin is made of resin and whose outer periphery is wound with a coated wire, thereby forming a coil. When the coil is powered, attractive force is generated between the movable core and the fixed core, thereby causing the movable core to move towards the fixed core.

According to the aforementioned solenoid valve, strength of attractive force for moving the movable core may be increased in proportion to the number of windings of the coated wire. In order to increase the number of windings of the coated wire, an inner diameter of the coil may be reduced, for example, in cases where an outer diameter of the coil is fixed. This method is achieved by reducing a thickness in radial direction of the bobbin on which the coated wire is wounded.

However, the bobbin needs to have strength for enduring tension generated at a time of winding of the coated wire. Thus, decrease in thickness of the bobbin in the radial direction is limited to a certain degree.

Thus, a need exists for a solenoid valve in which the number of windings of a coated wire can be increased in a state in which an outer diameter of the coil is fixed.

### SUMMARY OF THE INVENTION

According to an aspect of the present invention, a solenoid valve including a first yoke having a cylindrical shape, a second yoke having a cylindrical shape and arranged so as to be coaxial with the first yoke, an intermediate member for connecting the first yoke and the second yoke to each other, a coil provided on an outer side of the first yoke and the second yoke and cylindrically formed by a coated wire wound, a movable member movably supported by an inner peripheral face of the first yoke so as to face the second yoke and moving towards the second yoke by means of an attractive force generated between the second yoke and the movable member in association with a power supply to the coil, and a case for accommodating therein the first yoke, the second yoke and the coil characterized in that the solenoid valve further comprises an insulating film formed on respective outer peripheral faces (5c, 3c) of the first yoke and the second yoke, and the wire is wound around the first yoke and the second yoke via the insulating film.

According to the aforementioned invention, the insulating film is formed on the respective outer peripheral faces of the first yoke and the second yoke. Then, the coated wire is wound around the respective outer peripheral faces of the first yoke and the second yoke via the insulating film for the purposes of forming the coil. Thus, in such the structure, a bobbin for forming the coil is not required on the radially outer side of the first yoke and the second yoke. That is, an outer diameter of the coil is restricted by the case and so on, however an inner diameter of the coil is made relatively small to a certain degree corresponding to a difference between a thickness of the bobbin and the insulating film, which achieves increase of the number of windings of the coated wire. As a result, when compared to a solenoid valve having a substantially same size, a larger attractive force is exerted, thereby enhancing performance of the solenoid valve.
Appended sub-claims 2 to 5 are directed towards advantageous embodiments of the inventive solenoid valve.

According to another aspect of the present invention, a method of producing a solenoid valve including a first yoke having a cylindrical shape, a second yoke having a cylindrical shape and arranged so as to be coaxial with the first yoke, an intermediate member for connecting the first yoke and the second yoke to each other, a coil provided on an outer side of the first yoke and the second yoke and cylindrically formed by a coated wire wound, and a movable member movably supported by an inner peripheral face of the first yoke so as to face the second yoke, the movable member moving towards the second yoke by means of an attractive force generated between the second yoke and the movable member in association with a power supply to the coil characterized in that the method of producing a solenoid valve comprises a first step for connecting and fixing the first yoke and the second yoke to each other by means of the intermediate member, a second step for forming an insulating film on respective outer peripheral faces of the first yoke and the second yoke, and a third step for forming the coil by a coated wire wound around the respective outer peripheral faces of the first yoke and the second yoke via the insulating film.

According to the aforementioned invention, a bobbin for forming the coil is not required on the radially outer side of the first yoke and the second yoke. Thus, workload for disposing the first yoke and the second yoke into the bobbin is not required, thereby achieving effective production of the solenoid valve.

### BRIEF DESCRIPTION OF THE DRAWINGS

The foregoing and additional features and characteristics of the present invention will become more apparent from the following detailed description considered with reference to the accompanying drawings, wherein:

Fig. 1 is an axial cross-sectional view of a linear solenoid valve according to an embodiment of the present invention; and

Figs 2A, 2B and 2C are views each showing a method of producing the linear solenoid valve according to the embodiment of the present invention.

### DETAILED DESCRIPTION

An embodiment of the present invention is explained with reference to the attached drawings.

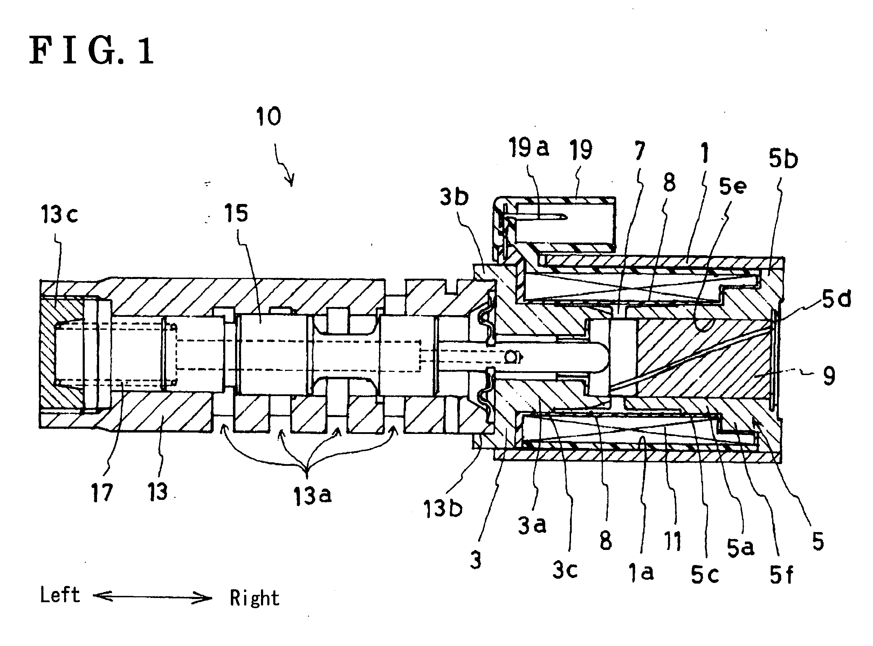

Fig. 1 is an axial cross-sectional view of a linear solenoid valve 10 according to the present embodiment. The linear solenoid valve 10 controls pressure, amount, and the like of fluid used for controlling an external controlling object such as an automatic transmission of a vehicle. A mechanical structure of the linear solenoid valve 10 is explained below.

As shown in Fig. 1, the linear solenoid valve 10 includes a case 1 having a substantially cylindrical shape and made of magnetic material. Then, a step-shaped cylindrical front yoke 3 (second yoke) and a step-shaped cylindrical rear yoke 5 (first yoke) both made of magnetic material are arranged inside of the case 1 so as to be coaxial therewith. The front yoke 3 includes a small diameter portion 3a and a large diameter portion 3b while the rear yoke 5 includes a small diameter portion 5a, a large diameter portion 5b, and a stepped portion 5f. The small diameter portion 3a of the front yoke 3 is formed so as to face the rear yoke 5 while the large diameter portion 5b is formed on an opposite side of the rear yoke 5. In addition, the small diameter portion 5a of the rear yoke 5 is formed so as to face the front yoke 3 while the large diameter portion 5b is formed on an opposite side of the front yoke 3. The large diameter portion 3b of the front yoke 3, and the large diameter portion 5b of the rear yoke 5 are respectively disposed into an inner peripheral face 1a of the case 1. An outer diameter of the small diameter portion 3a of the front yoke 3 is substantially equal to that of the small diameter portion 5a of the rear yoke 5. An outer diameter of the stepped portion 5f of the rear yoke 5 is defined so as to be larger than that of the small diameter potion 5a and smaller than that of the large diameter portion 5b. Then, a plate-shaped stopper 5d is secured to a right side of the rear yoke 5 as shown in Fig. 1. Further, a sleeve 7 (intermediate member) made of nonmagnetic material is disposed between the front yoke 3 and the rear yoke 5 in an axial direction of the linear solenoid valve 10 (i.e. horizontal direction in Fig. 1). The sleeve 7 connects the front yoke 3 and the rear yoke 5 to each other. That is, the front yoke 3 and the rear yoke 5 are integrally formed by means of the sleeve 7.

An insulating film 8 is formed on an outer peripheral face 3c of the front yoke 3 and an outer peripheral face 5c of the rear yoke 5. DLC (diamond-like carbon) or the like is used for the insulating film 8. According to the present embodiment, the insulating film 8 is a thin film having a thickness of several micrometers to several tens of micrometers.

A substantially column-shaped plunger 9 (movable member) is made of magnetic material and supported by an inner peripheral face 5e of the rear yoke 5 so as to be slidable in the axial direction of the linear solenoid valve 10. A magnetic gap is formed between a left end face of the plunger 9 and a right end face of the front yoke 3, which face each other, as shown in Fig. 1. As a result, the case 1, the rear yoke 5, the plunger 9, and the front yoke 3 form a magnetic circuit. According to this magnetic circuit, even when the plunger 9 is moved in the axially leftward direction in Fig. 1, a passage of magnetic flux is ensured between the rear yoke 5 and the plunger 9 because of the stepped portion 5f formed on the rear yoke 5. Thus, characteristic of attractive force in the linear solenoid valve 10 is stable regardless of an axial position of the plunger 9.

A coil 11 is provided on a radially outer side of the front yoke 3 and the rear yoke 5. The coil 11 having a cylindrical shape is coaxially accommodated in the case 1. An outer diameter of the coil 11 is defined accordingly. The coil 11 is formed by a coated wire (not shown) wound around the outer peripheral faces 3c and 5c of the front yoke 3 and the rear yoke 5 via the insulating film 8.

A sleeve 13 is disposed into the large diameter portion 3b of the front yoke 3 at an outer peripheral face 13b arranged on a right end side in Fig. 1. A spool 15 is accommodated in the sleeve 13 in such a manner that the spool 15 is able to reciprocate in the axial direction. Fluid ports 13a formed on the sleeve 13 are arranged such that a fluid passage is switched and a size of an opening is adjusted in response to an axial position of the spool 15. The sleeve 13 is integrally assembled on an external controlling object (not shown) for controlling pressure, amount, and the like of fluid used for the control of the external controlling object based on the axial position of the spool 15 relative to the sleeve 13.

The spool 15 having a column shape with multiple steps is made of nonmagnetic material and constantly biased in a rightward direction in Fig. 1 by means of a spring 17 whose one end is supported by a stopper 13c secured to a left end side of the sleeve 13. A right end of the spool 15 is in contact with a left end face of the plunger 9. That is, the plunger 9 is also constantly biased in a rightward direction in Fig. 1 by a biasing force of the spring 17. Accordingly, the plunger 9 and the spool 15 are constantly axially moved as a unit. A rightward movement of the plunger 9 is restricted by the stopper 5d secured to a right end side of the rear yoke 5.

A connector 19 made of resin is provided on the case 1. A terminal 19a is integrally formed on the connector 19 and electrically connected to the coil 11. Accordingly, when the terminal 19a is electrically connected to a supply current control device and the like (not shown), the current supplied to the coil 11 is controlled.

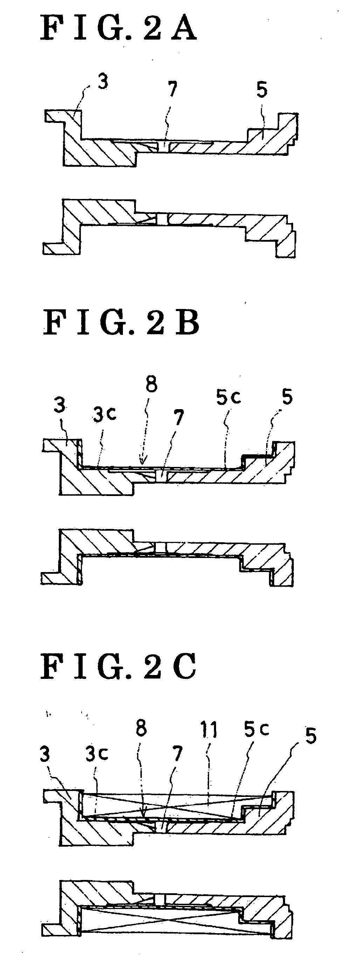

Next, a method of producing the linear solenoid valve 10 according to the present embodiment is explained with reference to Figs. 2A to 2C. Figs. 2A to 2C are views for showing a producing method of the linear solenoid valve 10.

First, as shown in Fig. 2A, the front yoke 3 and the rear yoke 5 are connected and fixed to each other by means of the sleeve 7 in advance.

Then, as shown in Fig. 2B, the insulating film 8 is formed in a coating manner on the outer peripheral faces 3c and 5c of the front yoke 3 and the rear yoke 5 which are connected and fixed to each other by means of the sleeve 7. Alternatively, the insulating film 8 may be first formed on the outer peripheral faces 3c and 5c of the font yoke 3 and the rear yoke 5 individually, and then the front yoke 3 and the rear yoke 5 may be connected and fixed to each other by means of the sleeve 7.

Next, the coated wire is wound around the outer peripheral faces 3c and 5c of the front yoke 3 and the rear yoke 5. Then, as shown in Fig. 2C, the coil 11 is formed on a radially outer side of the front yoke 3 and the rear yoke 5.

After the process shown in Figs. 2A to 2C, components such as the plunger 9 and the case 1 are assembled for the production of the linear solenoid vale 10 shown in Fig. 1.

An operation of the linear solenoid valve 10 according to the present embodiment is explained below.

In cases where the coil 11 is not powered, the plunger 9 is biased in a rightward direction in Fig. 1 by means of the biasing force of the spring 17, and made in contact with the stopper 5d of the rear yoke 5. In such circumstances, if the coil 11 is powered by the operation of a supply current control unit and the like, the magnetic flux is generated in the aforementioned magnetic circuit. Then, the plunger 9 is pulled in the axial direction towards the front yoke 3 so as to move in a leftward direction in Fig. 1 against the biasing force of the spring 17. The axial position of the plunger 9 is determined where the biasing force of the spring 17 and the attractive force are balanced out. In association with the leftward movement of the plunger 9, the spool 15 is also moved in the leftward direction. Therefore, the axial position of the plunger 9, i.e. the axial position of the spool 15, can be continuously (i.e. linearly) controlled by controlling the axial attractive force acting on the plunger 9, which can be achieved by controlling power supply amount to the coil 11 by the operation of the supply current control device and the like. The linear control of pressure, amount, and the like of fluid used for the control of the external controlling object can be achieved.

According to the aforementioned linear solenoid valve 10, the insulating film 8 is formed on the outer peripheral faces 3c and 5c of the front yoke 3 and the rear yoke 5. Then, the coated wire is wound around the outer peripheral faces 3c and 5c of the front yoke 3 and the rear yoke 5 via the insulating film 8 for the purposes of forming the coil 11. Thus, in such the structure, a bobbin for forming the coil 11 is not required on the radially outer side of the front yoke 3 and the rear yoke 5. That is, an outer diameter of the coil 11 is restricted by the case 1 and so on, however an inner diameter of the coil 11 is made relatively small to a certain degree corresponding to a difference between a thickness of the bobbin and the insulating film 8, which achieves increase of the number of windings of the coated wire. As a result, when compared to a solenoid valve having a substantially same size, a larger attractive force is exerted, thereby enhancing performance of the solenoid valve.

Further, according to the aforementioned embodiment, workload for disposing the front yoke 3 and the rear yoke 5 into a bobbin is not required, thereby achieving effective production of the linear solenoid valve 10.
It is explicitly stated that all features disclosed in the description and/or the claims are intended to be disclosed separately and independently from each other for the purpose of original disclosure as well as for the purpose of restricting the claimed invention independent of the compositions of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A solenoid valve (10) comprising a first yoke (5) having a cylindrical shape, a second yoke (3) having a cylindrical shape and arranged so as to be coaxial with the first yoke, an intermediate member (7) for connecting the first yoke and the second yoke to each other, a coil (11) provided on an outer side of the first yoke and the second yoke and cylindrically formed by a coated wire wound, a movable member (9) movably supported by an inner peripheral face (5e) of the first yoke so as to face the second yoke and moving towards the second yoke by means of an attractive force generated between the second yoke and the movable member in association with a power supply to the coil, and a case for accommodating the first yoke, the second yoke, and the coil **characterized in that** the solenoid valve further comprises an insulating film (8) formed on respective outer peripheral faces (5c, 3c) of the first yoke and the second yoke, and the wire is wound around the first yoke and the second yoke via the insulating film.

2. A solenoid valve (10) according to claim 1,
the case (1) has a cylindrical shape and defines an outer diameter of the coil.

3. A solenoid valve (10) according to either one of claims 1 and 2, wherein the first yoke (5) includes a first small diameter portion (5a) formed so as to face the second yoke (3) and a first large diameter portion (5b) formed on an opposite side of the second yoke while the second yoke includes a second small diameter portion (3a) formed so as to face the first yoke and a second large diameter portion (3b) formed on an opposite side of the first yoke.

4. A solenoid valve (10) according to claim 3, wherein the first yoke (5) includes a stepped portion (5f) formed between the first small diameter portion (5a) and the first large diameter portion (5b), and an outer diameter of the stepped portion is larger than that of the first small diameter portion and smaller than that of the first large diameter portion.

5. A solenoid valve (10) according to any one of claims 1 through 4, wherein the insulating film (8) is made of DLC.

6. A method of producing a solenoid valve (10) including a first yoke (5) having a cylindrical shape, a second yoke (3) having a cylindrical shape and arranged so as to be coaxial with the first yoke, a coil (11) provided on an outer side of the first yoke and the second yoke and cylindrically formed by a coated wire wound, an intermediate member (7) for connecting the first yoke and the second yoke to each other, and a movable member (9) movably supported by an inner peripheral face (5e) of the first yoke so as to face the second yoke, the movable member moving towards the second yoke by means of an attractive force generated between the second yoke and the movable member in association with a power supply to the coil **characterized in that** the method of producing the solenoid valve comprises:
a first step for connecting and fixing the first yoke and the second yoke to each other by means of the intermediate member;
a second step for forming an insulating film on respective outer peripheral faces (5c, 3c) of the first yoke and the second yoke; and
a third step for forming the coil by a coated wire wound around the respective outer peripheral faces of the first yoke and the second yoke via the insulating film.
